# EUROPÄISCHE PATENTSCHRIFT

(11) **EP 3 902 097 B1**
(45) Veröffentlichungstag und Bekanntmachung des Hinweises auf die Patenterteilung: **13.12.2023**
(21) Anmeldenummer: 20170675.1
(22) Anmeldetag: 21.04.2020
(51) Int. Cl.: H02J 13/00

(54) **VERFAHREN UND ANORDNUNG ZUR ERKENNUNG EINER TOPOLOGIE IN EINEM NIEDERSPANNUNGSNETZ**
METHOD AND ARRANGEMENT FOR DETECTING A TOPOLOGY IN A LOW VOLTAGE NETWORK
PROCÉDÉ ET SYSTÈME DE DÉTECTION D'UNE TOPOLOGIE DANS UN RÉSEAU BASSE TENSION

(43) Veröffentlichungstag der Anmeldung: 27.10.2021
(73) Patentinhaber: Siemens Aktiengesellschaft, 80333 München (DE)
(72) Erfinder: Fröhner, Wiebke, 92224 Amberg (DE); Werner, Thomas, 91126 Rednitzhembach (DE)
(74) Vertreter: Siemens Patent Attorneys

(56) Entgegenhaltungen:
- EP-A1- 3 324 506
- EP-A1- 3 624 290
- DE-B3-102012 220 846

## Beschreibung

Die Erfindung betrifft ein Verfahren zur Erkennung einer Topologie in einem Niederspannungsnetz gemäß dem Oberbegriff des Anspruchs 1 sowie eine Anordnung nach dem Oberbegriff des Anspruchs 13.

Bei der dezentralen Steuerung von Netzen, insbesondere von Niederspannungsnetzen, muss in einem Steuerungsgerät in einer Netzstation (engl. "Secondary Substation") für eine Reihe von Anwendungsfällen bekannt sein, welche elektrischen Betriebsmittel, wie z.B. Ladestationen, Wärmepumpen, PV-Anlagen, Batteriespeicher etc.) sich in dem unterlagerten Netz befinden und an welchen Abgängen sie angeschlossen sind. Ein möglicher Anwendungsfall ist beispielsweise das sog. "Digitale Ortsnetz", bei dem ein Steuergerät die Belastung des Transformators und der Abgangskabel erfasst und im Falle einer Überlastung Steuerungssignale an die steuerbaren Lasten in dem Ortsnetz aussendet.

In Niederspannungsnetzen stehen die Verteilnetzbetreiber vor dem Problem, dass diese elektrischen Betriebsmittel nahezu ausschließlich im Besitz der Endkunden sind, die diese Anlagen auswählen, einbauen und betreiben. Die technischen Anschlussbedingungen sehen im Allgemeinen eine Anmeldepflicht für diese Anlagen vor, so dass dem Verteilnetzbetreiber prinzipiell bekannt ist, wo sich die entsprechenden Anlagen in den Netzen befinden. In der Praxis zeigt sich aber, dass die Datenerhebungen und die Datenflüsse für die Erhebung in den Verteilnetzunternehmen sehr komplex und fehlerbehaftet sind. Aus diesem Grund ist eine automatisierte Topologie-Erkennung in den Steuerungsgeräten der Netzstation wünschenswert. Erste Umsetzungen dezentraler Steuerungsgeräte in Ortsnetzstationen setzen konkrete Datenmodelle voraus, die über entsprechende Schnittstellen in die Geräte eingebracht werden.

Bisher wird eine automatisierte Erkennung einer Topologie z.B. anhand eines aus der Druckschrift EP 3624290 A1 bekannten Verfahrens durchgeführt. Dabei wird von einem Steuergerät in einer Ortnetzstation ein für ein ausgewähltes Betriebsmittel spezifischer Test-Steuerbefehl auf alle Abgangsleitungen der Ortsnetzstation ausgesendet, wobei der Test-Steuerbefehl zur Auslösung einer Veränderung einer Leistungsaufnahme oder Leistungsabgabe des ausgewählten Betriebsmittels bestimmt ist. Anschließend wird eine Veränderung des elektrischen Stroms an den Ausgangsleitungen der jeweiligen Ortnetzstationen gemessen. Für diejenige Abgangsleitung, an der die Veränderung gemessen wurde, wird angenommen, dass das ausgewählte Betriebsmittel angeschlossen ist. Das Verfahren nutzt die Tatsache, dass die Kommunikation für die Testsignale über eine elektrische Leitung (sog. "Powerline Carrier Communication") erfolgt, die für die Topologie-Erkennung zwei vorteilhafte Eigenschaften bietet:
1. Das Steuerungsgerät kann nur mit solchen Betriebsmitteln kommunizieren, mit denen es auch topologisch verbunden ist. Betriebsmittel, die sich in anderen Ortsnetzen befinden, können von dem Steuerungsgerät kommunikationstechnisch nicht erreicht werden.
2. Die Kommunikationseinrichtungen der Ladeeinrichtungen melden sich nach der Installation an dem Steuerungsgerät in der Ortsnetzstation automatisch kommunikationstechnisch an. Damit erkennt das Steuerungsgerät sofort, dass Veränderungen in seinem Ortsnetz stattgefunden haben und kann mit der Erkennung der neuen Topologie beginnen.

Die Druckschrift EP 3 624 290 A1 offenbart folglich ein Verfahren zur Erkennung einer Topologie in einem Niederspannungsnetz, das Ortsnetzstationen mit jeweils mehreren Ausgangsleitungen aufweist, wobei jede Ausgangsleitung mit mindestens einem steuerbaren elektrischen Betriebsmittel verbunden ist, und wobei jede Ortsnetzstation eine Steuereinrichtung aufweist,
mit den durch die mittels einer Rechneranordnung durchgeführten Schritten:
- Auswählen eines Betriebsmittels, und
- Aussenden eines für das ausgewählte Betriebsmittel spezifischen Test-Steuerbefehls von der jeweiligen Steuereinrichtung zu dem Betriebsmittel, wobei der Test-Steuerbefehl zur Auslösung einer Veränderung einer Leistungsaufnahme oder Leistungsabgabe des ausgewählten Betriebsmittels ausgebildet ist, und
- Messen einer Veränderung mindestens einer elektrischen Größe an den Ausgangsleitungen der jeweiligen Ortnetzstation mittels jeweils einer Messeinrichtung, und
- Zuordnen des ausgewählten elektrischen Betriebsmittels zu derjenigen Ausgangsleitung derjenigen Ortsnetzstation, an der eine Korrelation zwischen Test-Steuerbefehl und Veränderung erkannt wird.

Ferner sind die Druckschriften DE 10 2012 220846 B3 und EP 3 324 506 A1 bekannt, die sich mit Topologieerkennung in einem Niederspannungsnetz beschäftigen.

Ausgehend von dem bekannten Verfahren zur Erkennung einer Topologie in einem Niederspannungsnetz stellt sich an die Erfindung die Aufgabe, ein Verfahren anzugeben, mit dem eine Topologie auch bei sehr großen und komplexen Niederspannungsnetzen sehr schnell erkannt werden kann.

Die Erfindung löst diese Aufgabe durch ein Verfahren gemäß Anspruch 1.

Gegenüber dem bisherigen Verfahren wird bei der Erfindung eine Vorauswahl der von einer Steuereinrichtung mittels des Test-Steuerbefehls anzusteuernden Betriebsmittel vorgenommen, indem basierend auf geographischer Nähe nur die einer Ortsnetzstation nächstgelegenen Betriebsmittel für eine "lokale" Überprüfung der Topologie ausgewählt werden.

Eine Topologie im Sinne der Erfindung ist z.B. eine Information darüber, wie eine Anordnung bzw. elektrische Verschaltung von Leitungen und Betriebsmitteln in einem konkreten Beispiel ausgebildet ist. Beispielsweise umfasst eine Topologie Informationen darüber, welche Betriebsmittel wie z.B. Ladesäulen für Elektrofahrzeuge an welchen Abgängen bzw. Ausgangsleitungen welcher Ortsnetzstation in einem Niederspannungsnetz angeschlossen sind.

Ein Niederspannungsnetz ist z.B. ein Verteilnetz für elektrische Energie mit einer Nennspannung von z.B. 400 V bei dreiphasiger Wechselspannung. Das Verteilnetz ist i.d.R. über mehrere Ortnetzstationen mit Transformatoren an ein übergeordnetes Mittelspannungsnetz mit einer Nennspannung im kV - Bereich angeschlossen. An das Niederspannungsnetz sind z.B. Verbraucher elektrischer Energie, wie z.B. Ein- oder Mehrfamilienhäuser oder Ladesäulen für Elektrofahrzeuge angeschlossen. Aber auch Erzeuger elektrischer Energie können mit dem Niederspannungsnetz verbunden sein, wie etwa Photovoltaikanlagen auf den eingangs genannten Häusern.

Eine Ortsnetzstation weist dabei i.d.R. neben einem Transformator auch mindestens eine Kommunikationseinrichtung auf. Ferner ist eine Steuereinrichtung vorgesehen, die ausgebildet ist, Steuerbefehle für steuerbare Betriebsmittel wie z.B. Ladesäulen zu erstellen und diese mittels der Kommunikationseinrichtung zu übermitteln. Bei der Steuereinrichtung kann es sich um einen Computer mit einem Datenspeicher, einer Schnittstelle zur Kommunikationseinrichtung sowie einem Datenprozessor handeln.

Wenn eine Ortsnetzstation weiß, an welcher ihrer Ausgangsleitungen bzw. Abgänge welche steuerbaren Betriebsmittel angeschlossen sind, kann die Steuereinrichtung beispielsweise durch Ansteuerung der Betriebsmittel Schieflasten zwischen einzelnen Phasen o.Ä. vermeiden. Ferner können mittels Fahrplänen für nachgelagerte Verbraucher wie z.B. Häuser Lastspitzen gemindert werden.

Geographische Nähe meint im Rahmen der Erfindung einen physischen Abstand zwischen einer Ortsnetzstation und einem Betriebsmittel, beispielsweise eine sog. "Luftlinie" bzw. einen direkten Abstand ohne Umwege, wie er z.B. aus GPS-Daten leicht ermittelt werden kann.

Ein Test-Steuerbefehl ist z.B. ein Datentelegramm, das per sog. Powerline Communication über die Ausgangsleitungen übermittelt bzw. auf die Niederspannung moduliert wird. Der Test-Steuerbefehl kann jedoch in einer anderen Ausgestaltung auch über eine drahtlose Kommunikation per Funksignal oder über eine drahtgebundene Kommunikation, z.B. internetbasiert, übermittelt werden. Der Test-Steuerbefehl ist z.B. spezifisch für ein Betriebsmittel erstellt und richtet sich an dessen Kennung bzw. Kommunikationsadresse. Er enthält z.B. den Befehl, das Betriebsmittel auf Volllast einzuschalten, also z.B. eine Ladesäule kurzzeitig für 1 min auf maximale Leistungsaufnahme zu schalten. Dies führt an der Ausgangsleitung, an die die Ladesäule angeschlossen ist, zu einer erhöhten Last und kann mittels der Messeinrichtung erkannt werden.

Eine elektrische Größe, die von der jeweiligen Messeinrichtung erfasst werden kann, ist z.B. die Größe eines elektrischen Stroms. Alternativ können auch eine elektrische Spannung und/oder Leistung und/oder eine Frequenz der Niederspannung auf der Ausgangsleitung gemessen werden.

Das erfindungsgemäße Verfahren bietet bei sehr großen und komplexen Niederspannungsnetzen, insbesondere bei Betriebsmitteln, die per Funk angemeldet und parametriert werden, große Vorteile. Bei der Implementierung von Digitalen Ortsnetzen mit funkbasierten Kommunikationsnetzwerken entfallen nämlich die eingangs für das bekannte Verfahren genannten Vorteile:
1. In einem funkbasierten oder internetbasierten Netzwerk kann jedes Steuerungsgerät in jeder Ortsnetzstation prinzipiell jedes Kommunikationsgerät jedes Betriebsmittels sehen, dass sich in dem Verteilnetz oder auch außerhalb befindet. Bei einer oben beschriebenen Zuordnung mit Hilfe von Test-Steuerbefehlen hätte dies zur Konsequenz, dass ein Steuerungsgerät Test-Steuerbefehle an jedes Betriebsmittel senden müsste. Dies wäre aufgrund der großen Anzahl von Betriebsmitteln in einem komplexen Niederspannungsnetz sehr zeitaufwendig und nicht praktikabel, wenn z.B. in einem Niederspannungsnetz einer Großstadt beispielsweise Steuereinrichtungen in einer Vielzahl von Ortsnetzstationen nachgerüstet werden, um bis zu 50.000 Testsignale an steuerbare Betriebsmittel auszusenden.
2. Die Kommunikationseinrichtungen der Betriebsmittel melden sich nur in dem (zentralen) Kommunikationssystem an und nicht direkt an der Steuereinrichtung in der Netzstation. Damit ist es dem Steuerungsgerät nicht mehr möglich zu erkennen, dass sich die Topologie in seinem Ortsnetz verändert hat und es mit einer erneuten Topologie-Erkennung beginnen muss.

In einer bevorzugten Ausführungsform des erfindungsgemäßen Verfahrens wird die erkannte Topologie genutzt, um im laufenden Betrieb des Niederspannungsnetzes mittels der Steuereinrichtungen Steuerbefehle für alle an die Ausgangsleitungen einer Ortsnetzstation angeschlossenen steuerbaren Betriebsmittel derart zu erstellen und zu übermitteln, dass Schielasten zwischen den Ausgangsleitungen einer Ortsnetzstation und/oder Überlastungen einzelner Ausgangsleitungen einer Ortsnetzstation vermieden werden.

In einer bevorzugten Ausführungsform des erfindungsgemäßen Verfahrens werden mittels der Rechneranordnung folgende zeitlich vorgelagerte Schritte ausgeführt:
Bereitstellen einer ersten Datenstruktur, die für jede Steuereinrichtung eine erste Kennung und eine erste
Kommunikationsadresse und eine erste geographische Position aufweist, und
Bereitstellen einer zweiten Datenstruktur, die für jedes Betriebsmittel eine zweite Kennung und eine zweite Kommunikationsadresse und eine zweite geographische Position aufweist.

Beispielsweise kann es sich bei den Datenstrukturen um einfache Tabellen oder Listen handeln, die für jede Kennung eine Kommunikationsadresse und eine geographische Position enthalten. Dies ist ein Vorteil, weil auf diese Weise besonders einfach ein Vergleich der geographischen Abstände zwischen einer Steuereinrichtung und allen Betriebsmitteln erfolgen kann. Die geographische Position kann dabei z.B. jeweils als GPS-Koordinaten hinterlegt sein.

Die erste Kennung, erste Kommunikationsadresse und erste geographische Position der Steuereinrichtungen in den Ortsnetzstationen kann dabei z.B. von einer zentralen Leitstelle für das Mittelspannungsnetz abgefragt und an die Rechneranordnung übermittelt werden. Alternativ wird beim Einbau einer Steuereinrichtung in eine bestehende Ortsnetzstation ihre geographische Position der Rechneranordnung beispielsweise mit Hilfe eines mobilen Endgeräts wie einem Laptop mitgeteilt. Dazu wird die erste Kennung der Steuereinrichtung von dem mobilen Endgerät aufgenommen und zusammen mit der geographischen Position an die Rechneranordnung geschickt. Eine solche Vorgehensweise ist beispielsweise in der Druckschrift EP 3070556 B1 beschrieben.

Die zweite Kennung, zweite Kommunikationsadresse und zweite geographische Position eines Betriebsmittels im Niederspannungsnetz kann dabei z.B. bei der Installation des Betriebsmittels automatisch oder durch einen Techniker erfasst und an die Rechneranordnung übermittelt werden. Dabei kann ein mobiles Gerät wie ein Laptop, ein Handy oder ein Tablet mit GPS-Empfänger o.Ä. eingesetzt werden.

Beispielsweise weisen die Steuereinrichtungen und die Betriebsmittel jeweils eine Kommunikationseinrichtung auf, der die Kommunikationsadresse zugeordnet ist. Eine erste Kommunikationsadresse ist z.B. eine Adresse einer Kommunikationseinrichtung einer Steuereinrichtung im Kommunikationsnetzwerk für die Ortsnetzstationen. Eine zweite Kommunikationsadresse ist z.B. eine Adresse einer Kommunikationseinrichtung eines Betriebsmittels im Kommunikationsnetzwerk für die Einrichtung und Parametrierung für Betriebsmittel. Beispielsweise kann es sich jeweils um eine Internet- bzw. IP-Adresse handeln.

Bei den Kennungen kann es sich beispielsweise um den Namen, die Seriennummer oder um eine andere frei konfigurierbare Zeichenfolge handeln. Alternativ kann z.B. auch eine sog. MAC-Adresse des Kommunikationsgerätes der jeweiligen Steuereinrichtung oder des jeweiligen Betriebsmittels als Kennung genutzt werden. In diesem Fall ermittelt. Die Rechneranordnung die Netzwerkadresse zum Beispiel mit dem sog. "Reverse Address Resolution Protocol (RARP)", das von Wikipedia bekannt ist (permanenter Link: https://de.wikipedia.org/w/index.php?title=Reverse_Address_Resolution_Protocol&oldid=192403469).

Für die Kennungen können z.B. Informationen über die Art des Betriebsmittels (Ladesäule, Batterie, usw.) sowie Betriebsparameter, wie z.B. maximale und minimale Energieaufnahme, hinterlegbar sein. Aus dieser Weise wird nach Erkennung der Topologie eine intelligente Steuerung des Energieverbrauchs bzw. der Energieerzeugung der Betriebsmittel durch die Steuereinrichtungen ermöglicht.

In einer alternativen Ausgestaltung kann vorgesehen werden, dass mittels der Rechneranordnung nur die zweite Kennung jeweils in der zweiten Datenstruktur erfasst wird. Diese wird an die Steuereinrichtungen gesendet. Die Steuereinrichtungen ermitteln jeweils selbsttätig die Netzwerkadressen der Kommunikationseinrichtungen der Betriebsmittel, was beispielsweise mit Hilfe des o.g. RARP erfolgt. Diese Ausführung ist vorteilhaft, weil damit mit auf eine direkte Kommunikation der Rechneranordnung mit den Kommunikationsgeräten der Betriebsmittel verzichtet werden kann.

Eine Demontage und Wiedereinrichtung eines Betriebsmittels an einem anderen Abgang bzw. an einer anderen Stelle im Niederspannungsnetz entspricht dabei einer Neuinstallation: wird eine neue geographische Position für das Betriebsmittel übermittelt, so kann das erfindungsgemäße Verfahren nochmals ausgeführt werden.

In manchen Situationen kann es vorkommen, dass eine Kommunikationseinrichtung für ein Betriebsmittel in einem Ortsnetz installiert wird, bevor die Ortsnetzstation mit einer Steuereinrichtung ausgerüstet wurde. In diesem Fall wird keine der von der Rechneranordnung informierten Steuereinrichtungen diese Kommunikationseinrichtung erkennen und zuordnen können.

Deshalb wird vorgesehen, dass die erste und die zweite Datenstruktur neu aufgebaut bzw. aktualisiert wird, falls während der Topologie-Erkennung eine neue Steueranordnung bei der Rechneranordnung angemeldet wird. Basierend auf geographischer Nähe bekommt die neue Steuereinrichtung ebenfalls die Adresse des neuen Kommunikationsgerätes mitgeteilt und beginnt mit der Topologie-Erkennung mittels Test-Steuerbefehlen.

In einer bevorzugten Weiterbildung sind die Datenstrukturen mittels der Rechneranordnung versioniert. Dies ist ein Vorteil, um den zeitlichen Verlauf der Zuordnungen der Betriebsmittel zu dokumentieren. Beispielsweise kann die Versionierung mittels Hinterlegung einer fortlaufenden Nummer oder eines Zeitstempels erfolgen.

In einer weiteren bevorzugten Ausführungsform des erfindungsgemäßen Verfahrens werden mittels der Rechneranordnung folgende Schritte ausgeführt:
Bereitstellen einer dritten Datenstruktur, die für jede Steuereinrichtung jeweils die zweite Kennung und/oder die zweite Kommunikationsadresse aller der Steuereinrichtung bereits zugeordneten Betriebsmittel enthält. Dies ist ein Vorteil, weil die Rechneranordnung auf diese Weise nachverfolgen kann, welche Betriebsmittel in der Nähe welcher Steuereinrichtung vermutet werden. Beispielsweise kann es sich bei der dritten Datenstruktur jeweils um eine einfache Liste oder Matrix handeln.

In einer weiteren bevorzugten Ausführungsform des erfindungsgemäßen Verfahrens werden mittels der Rechneranordnung folgende Schritte ausgeführt:
Bereitstellen einer vierten Datenstruktur, die die zweite Kennung und/oder die zweite Kommunikationsadresse aller noch keiner Steuereinrichtung zugeordneten Betriebsmittel enthält. Dies ist ein Vorteil, weil die Rechneranordnung auf diese Weise nachverfolgen kann, welche Betriebsmittel noch zugeordnet werden müssen. Beispielsweise kann es sich bei der vierten Datenstruktur um eine einfache Liste handeln.

Das vorgeschlagene Konzept mit der Rechneranordnung kann auch vorteilhaft dazu genutzt werden, um den Steuereinrichtungen jeweils eine Deinstallation, einen Austausch oder einen physikalischen Umzug von Kommunikationsgeräten der Betriebsmittel bekannt zu geben. Wenn beispielsweise ein Kommunikationsgerät am Ort eines Betriebsmittels deinstalliert wird, sind die Arbeitsabläufe vor Ort analog zu denen bei der Installation des Gerätes.

Zunächst wird mit einem mobilen Endgerät, wie z.B. einem Laptop, die zweite Kennung des Kommunikationsgerätes erfasst und diese zusammen mit einer entsprechenden Markierung an die Rechneranordnung geschickt, die in der dritten Datenstruktur die zugeordnete Steuereinrichtung nachschlägt. Die Rechneranordnung und informiert diese Steuereinrichtung über die Deinstallation, woraufhin die Steuereinrichtung das Kommunikationsgerät aus seiner eigenen Datenhaltung entfernt und eine Bestätigung zurück an die Rechneranordnung sendet.

In ähnlicher Weise kann ein Tausch von Kommunikationsgeräten zweier Betriebsmittel einfach durch Austausch der betreffenden Kennungen bzw. Kommunikationsadressen in den Datenstrukturen erfolgen.

In einer weiteren bevorzugten Ausführungsform des erfindungsgemäßen Verfahrens übermittelt die Ortsnetzstation an die Rechneranordnung, an welcher ihrer Ausgangsleitungen das ausgewählte Betriebsmittel erkannt wurde. Die Rechneranordnung fügt das ausgewählte Betriebsmittel der dritten Datenstruktur hinzu und löscht das ausgewählte Betriebsmittel aus der vierten Datenstruktur. Auf diese Weise wird in der Rechneranordnung dokumentiert, welche Betriebsmittel erfolgreich für die Topologie erkannt wurden.

Für den unwahrscheinlichen Fall, dass mehrere Steuereinrichtungen das ausgewählte Betriebsmittel erkannt zu haben glauben, informiert die Rechneranordnung die betreffenden Steuereinrichtungen darüber, dass diese den Prozess der Topologie-Erkennung wiederholen müssen.

In einer weiteren bevorzugten Ausführungsform des erfindungsgemäßen Verfahrens erfolgt das Bereitstellen der Datenstrukturen in der Rechnereinrichtung, indem von den Betriebsmitteln jeweils mittels einer Kommunikationseinrichtung drahtlos die jeweilige Kennung, Kommunikationsadresse und geographische Position übermittelt wird. Es ist ein Vorteil einer drahtlosen Kommunikation, dass diese nahezu überall unkompliziert erfolgen kann und keine Einrichtung einer Datenkommunikation über eine Leitung oder über eine sog. Powerline Communication erfolgen muss. Ferner sind Latenzzeiten oder eine geringe Bandbreite unkritisch, da bei der Einrichtung bzw. Neuinstallation eines Betriebsmittels ausreichend Zeit zur Verfügung steht, um die Daten einmalig zu übertragen.

In einer weiteren bevorzugten Ausführungsform des erfindungsgemäßen Verfahrens erfolgt die drahtlose Übermittlung mittels Funksignalen nach einen der folgenden Standards: W-Lan, long range radio, Mobilfunk, 2G, 3G, 4G(LTE), 5G. Dies ist ein Vorteil, weil diese Standards weit verbreitet und kostengünstig verfügbar sind.

In einer weiteren bevorzugten Ausführungsform des erfindungsgemäßen Verfahrens wird der Test-Steuerbefehl per Datenübertragung über eine elektrische Leitung übermittelt. Dabei kann es sich beispielsweise um eine sog. "Powerline Communication" handeln, d.h. dass Daten als ein hochfrequentes Signal auf eine Niederspannung moduliert werden. Diese Technik ist lange erprobt und beispielsweise für "Smart Meter", d.h. sog. Intelligente Stromzähler, weit verbreitet. Es ist ein Vorteil der Datenübertragung über eine elektrische Leitung, dass diese eine sichere und zuverlässige Verbindung ermöglicht und beispielsweise gegenüber atmosphärischen Störungen - anders als Funksignale - vergleichsweise unempfindlich ist.

In einer weiteren bevorzugten Ausführungsform des erfindungsgemäßen Verfahrens wird der Test-Steuerbefehl per Datenübertragung über eine drahtlose Kommunikation übermittelt. Dies kann mittels Funksignalen nach einen der folgenden Standards erfolgen: W-Lan, long range radio, Mobilfunk, 2G, 3G, G(LTE), 5G.

In einer weiteren bevorzugten Ausführungsform des erfindungsgemäßen Verfahrens wird der Test-Steuerbefehl per Datenübertragung über eine drahtgebundene Kommunikation übermittelt. Beispielsweise kann ein Ethernetkabel oder ein Lichtwellenleiter eingesetzt werden.

In einer weiteren bevorzugten Ausführungsform des erfindungsgemäßen Verfahrens erfolgt eine Datenübertragung zwischen der Rechneranordnung und den Steuereinrichtungen über eine elektrische Leitung. Dabei kann es sich beispielsweise um eine sog. "Powerline Communication" handeln. Die Kommunikation zwischen den Steuereinrichtungen und der Rechneranordnung ist nur (typischerweise einmalig bei der Einrichtung, ggf. bei geänderter Konfiguration usw. mehrfach) für die Übertragung von Zuordnungsinformationen erforderlich, nicht aber ständig für den laufenden Betrieb der Digitalen Ortsnetze. Damit kann dieses Verfahren auch in solchen Verteilnetzen eingesetzt werden, in denen die Kommunikation zwischen den Steuereinrichtungen und der Rechneranordnung nicht stabil und zuverlässig ist.

In einer weiteren bevorzugten Ausführungsform des erfindungsgemäßen Verfahrens erfolgt nacheinander eine Auswahl und ein Aussenden eines Test-Steuerbefehls für alle einer Steuereinrichtung zugeordneten Betriebsmittel. Dies ist ein Vorteil, weil auf diese Weise iterativ alle einer Ortsnetzstation zugeordneten Betriebsmittel angesteuert werden können und, insofern eine signifikante Änderung einer elektrischen Größe an einer Ausgangsleitung erkannt wird, zugeordnet werden können. Damit kann eine Topologie des Niederspannungsnetzes nach und nach ermittelt werden.

In einer weiteren bevorzugten Ausführungsform des erfindungsgemäßen Verfahrens wird als elektrisches Betriebsmittel mindestens eines der folgenden Betriebsmittel verwendet: Ladestation für Elektrofahrzeuge, Wärmepumpe, Photovoltaikanlage, Batterie.

In einer weiteren bevorzugten Ausführungsform des erfindungsgemäßen Verfahrens wird für die Rechneranordnung ein zentraler Server verwendet. Beispielsweise kann diese Funktionalität der Topologie-Erkennung als eine zusätzliche Software-Applikation in ein bestehendes Gerätemanagementsystem integriert werden, welches die Steuereinrichtungen der Ortnetzstationen verwaltet und mit Updates versorgt. Es ist nicht somit nicht zwingend erforderlich, die Rechneranordnung als separates System auszulegen.

In einer weiteren bevorzugten Ausführungsform des erfindungsgemäßen Verfahrens wird die Rechneranordnung als eine Cloud-Einrichtung ausgebildet. Eine Cloud-Einrichtung im Sinne der Erfindung ist eine Anzahl von Datenspeicher- und Datenprozessorressourcen, die über ein Netzwerk, wie z.B. das Internet, miteinander verbunden sind. Eine Cloud-Einrichtung hat den Vorteil, dass sie leicht im laufenden Betrieb für höhere Anforderungen skalierbar ist und aufgrund der vom Cloud-Betreiber geschaffenen IT-Infrastruktur im Hintergrund kostengünstig, sicher und wartungsarm ist.

In einer weiteren bevorzugten Ausführungsform des erfindungsgemäßen Verfahrens wird die Rechneranordnung dezentral bei den Ortsnetzstationen angeordnet, wobei eine Datenkommunikation jeweils bilateral mit allen Ortsnetzstationen erfolgt, so dass für jede lokale Rechnereinrichtung einer Ortsnetzstation lokal jeweils eine erste und eine zweite Datenstruktur bereitgestellt werden. In dieser Variante ist keine zentrale Verwaltung der Datenstrukturen und Softwarekomponenten nötig, was ein Vorteil ist, weil es das Gesamtsystem robuster gegenüber Ausfällen macht. Ein Austausch von Informationen kann beispielsweise mittels einer sog. "blockchain" als dezentraler Datenbank erfolgen, die dezentral bei den Steuereinrichtungen in Kopie geführt wird.

In einer weiteren bevorzugten Ausführungsform des erfindungsgemäßen Verfahrens erfolgt das Zuordnen von Betriebsmitteln zu Steuereinrichtungen basierend auf geographischer Nähe, indem für jedes Steuergerät eine Liste von Betriebsmitteln erstellt wird, wobei die Liste nach geographischer Entfernung sortiert wird. Dies ist ein Vorteil, weil bei Sortierung z.B. nach aufsteigender Entfernung ein Test-Steuersignal automatisch zuerst von der Steuereinrichtung für die am wahrscheinlichsten angeschlossenen Betriebsmittel erzeugt wird. Damit werden Iterationen eingespart, was das erfindungsgemäße Verfahren durch eine Vorauswahl von Betriebsmitteln besonders schnell und zuverlässig macht.

In einer weiteren bevorzugten Ausführungsform des erfindungsgemäßen Verfahrens wird aus der jeweiligen sortierten Liste für eine Steuereinrichtung nur eine festgelegte Anzahl von geographisch nahen zugeordneten Betriebsmitteln ausgewählt, wobei die Anzahl in Abhängigkeit von einer geographischen Dichte von Ortnetzstationen im Umfeld der Ortnetzstation, der die Steuereinrichtung zugeordnet ist, festgelegt wird. Dies ist ein Vorteil, weil bei sehr nah beieinander liegenden Ortsnetzstationen in dicht besiedelten Gebieten leicht eine zu geringe Anzahl von naheliegenden Betriebsmitteln angesteuert werden könnte, so dass keine korrekte Zuordnung zu den Ausgangsleitungen ermöglicht würde. Daher ist es sinnvoll, z.B. in dicht besiedelten Gebieten eine größere Anzahl von Betriebsmitteln für die Zuordnung anzusteuern als in dünn besiedelten Gebieten.

Ausgehend von bekannten Anordnungen zur Erkennung einer Topologie in einem Niederspannungsnetz stellt sich an die Erfindung die Aufgabe, eine Anordnung anzugeben, mit der eine Topologie auch bei sehr großen und komplexen Niederspannungsnetzen sehr schnell erkannt werden kann.

Die Erfindung löst diese Aufgabe durch eine Anordnung gemäß Anspruch 13. Bevorzugte Ausführungsformen ergeben sich aus den abhängigen Ansprüchen 14 und 15. Es ergeben sich dabei sinngemäß die gleichen Vorteile wie eingangs für das erfindungsgemäße Verfahren erläutert.

Der Fachmann kann ohne Weiteres sämtliche für das erfindungsgemäße Verfahren vorgestellten Ausführungsformen für die erfindungsgemäße Anordnung übernehmen, anpassen oder frei kombinieren.

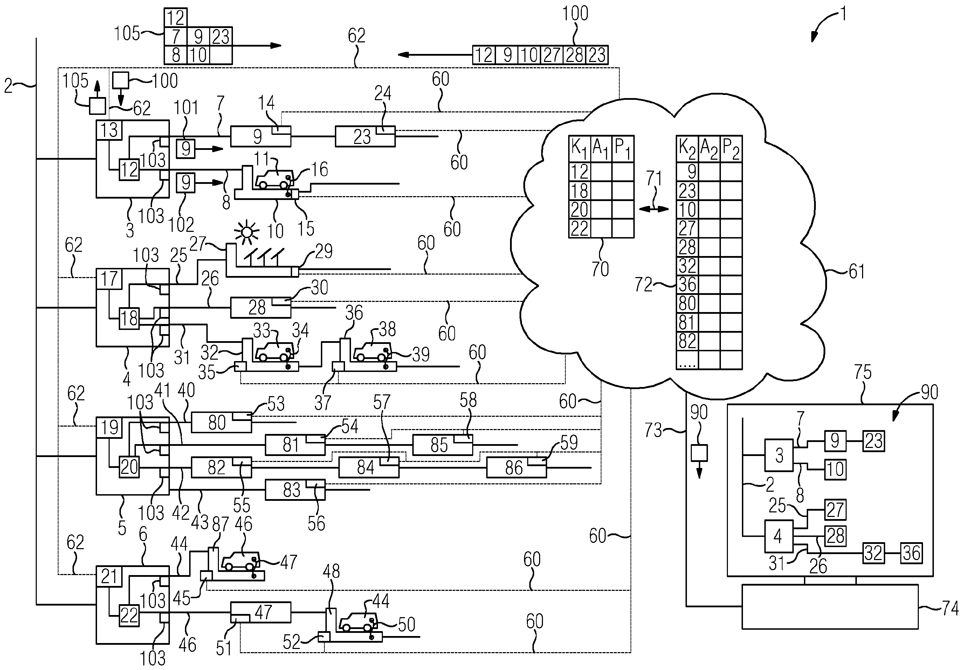

Zur besseren Erläuterung der Erfindung zeigt in schematischer Darstellung die Figur ein Ausführungsbeispiel der Erfindung.

An einem Mittelspannungsnetz 2 einer Stadt sind vier Ortsnetzstationen 3, 4, 5, 6 angeschlossen. Die Ortsnetzstationen 3, 4, 5, 6 weisen jeweils einen Transformator (nicht dargestellt) auf, um Niederspannung für ein nachgeordnetes Niederspannungsnetz bereitzustellen. Jede Ortsnetzstation weist eine Steuereinrichtung 12, 18, 20, 22 auf, die als Computer mit Datenspeicher, Prozessormitteln und Schnittstelle zu jeweils einer Kommunikationseinrichtung 13, 17, 19, 21 ausgebildet ist. Jede der Ortsnetzstationen 3, 4, 5, 6 weist mehrere Ausgangsleitungen 7, 8, 25, 26, 31, 40, 41, 42, 43, 44, 46 auf, die Niederspannung für das Niederspannungsnetz bereitstellen. An den Ausgangsleitungen 7, 8, 25, 26, 40, 41, 42, 44, 45, 46 sind jeweils ein oder mehrere steuerbare Betriebsmittel 9, 23, 10, 27, 28, 32, 36, 80 - 86, 87, 47, 48 installiert. Dabei kann es sich beispielsweise um Ladesäulen 10, 32, 36, 37, 48 für Elektrofahrzeugen 11, 33, 38, 46, 49, die per Ladekabel 16, 34, 39, 47, 50 angeschlossen sind, handeln, oder auch um Photovoltaikanlagen 27. Es kann sich auch um Wärmepumpen 23, 51 oder Batterien 9, 28, 80 - 86 handeln.

An jeder der Ausgangsleitungen 7, 8, 25, 26, 31, 40 - 44, 46 ist eine Messeinrichtung für ein Messen mindestens einer elektrischen Größe vorgesehen. Im hier gezeigten Fall wird mittels der Messeinrichtung 103 jeweils die Stärke eines Stromflusses auf den jeweiligen Ausgangsleitungen gemessen.

Jedes der steuerbaren Betriebsmittel weist eine Kommunikationseinrichtung 14, 24, 50, 29, 30, 35, 37, 45, 51 - 59 auf, die zur Bereitstellung einer drahtlosen Datenkommunikationsverbindung 60 (angedeutet durch gestrichelte Linien) per Mobilfunk (z.B. per LTE) ausgebildet sind.

Im Gegensatz dazu sind die Kommunikationseinrichtungen 13, 17, 19, 21 der Ortsnetzstationen 3, 4, 5, 6 für eine Bereitstellung einer Datenkommunikationsverbindung 62 per sog. "Power Line Communication" ausgebildet (angedeutet durch gestrichelte Linien). Die Datenkommunikationsverbindungen 60, 62 ermöglichen einen Datenaustausch mit einer Rechnereinrichtung 61, 73, 74, 75. Es handelt sich dabei um eine in einer Cloud 61 bereitgestellten Server-Einrichtung mit einsprechenden Software-Applikationen.

Die Datenkommunikationsverbindungen 60 können dabei über entsprechende funkbasierte Gateways und das Internet für die Cloud-Einrichtung 61 bereitgestellt werden. Die Datenkommunikation zu den Ortsnetzstationen 62 kann beispielsweise vermittelt über eine Leitstelle (nicht dargestellt) erfolgen, wobei von der Cloud-Einrichtung 61 eine internetbasierte Datenkommunikation mit der Leitstelle und von dort aus eine Power Line Communication über Stromleitungen direkt in die Ortsnetzstationen 3, 4, 5, 6 erfolgt.

An die Cloud-Einrichtung 61 ist über eine Internetverbindung 73 ein Desktopcomputer 74 mit Anzeigemittel 75 angeschlossen. Auf dem Anzeigemittel 75 bzw. Monitor kann einem Benutzer eine mittels des erfindungsgemäßen Verfahrens erkannte Topologie 90 des Niederspannungsnetzes dargestellt werden. Beispielhaft ist hier ein Ausschnitt des Niederspannungsnetzes dargestellt, das den Ortsnetzstationen 3, 4 nachgeordnet ist. Kern der erfindungsgemäßen Topologieerkennung ist es, dass den dargestellten Ausgangsleitungen 7, 8, 25, 26, 31 jeweils korrekt die an die Augangsleitungen 7, 8, 25, 31 angeschlossenen Betriebsmittel 9, 10, 23, 27, 28, 32, 36 zugeordnet sind. Beispielsweise wurde korrekt erkannt, dass an der Ausgangsleitung 7 der Ortsnetzstation 3 die Betriebsmittel 9 und 23 angeschlossen sind.

Im Folgenden soll die Arbeitsweise des erfindungsgemäßen Verfahrens näher erläutert werden:
Soll beispielsweise eine Topologie des der Ortsnetzstation 3 nachgeordneten Niederspannungsnetzes, d.h. die Zuordnung der Betriebsmittel 9, 23, 10 zu den Ausgangsleitungen 7, 8 der Ortsnetzstation 3 festgestellt werden, so werden von den Betriebsmitteln 9, 23, 10 bzw. den Kommunikationseinrichtungen 14, 24, 15 über die Datenkommunikationsverbindung 60 jeweils die Kennung K2 des Betriebsmittels, die Kommunikationsadresse A2 des Betriebsmittels bzw. der jeweiligen Kommunikationseinrichtung 14, 24, 15 sowie eine geographische Position P2 übermittelt.

Bei der geographischen Position handelt es sich um eine GPS - Koordinate, die beispielsweise mittels eines GPS-Empfängers ermittelt werden kann. Alternativ oder zusätzlich kann bei Installation des Betriebmittels 9, 23, 10 an eine Ausgangleitung 7, 8 durch einen Techniker mittels eines mobilen Endgerätes wie eines Laptops oder eines Tablets, die geographische Position erfasst und zur Übermittlung bereitgestellt werden.

Die übermittelten Daten werden in der Cloudeinrichtung 61 empfangen und dort in einer zweiten Datenstruktur 72, die als einfache Tabelle angedeutet ist, erfasst. Für jedes Betriebsmittel im Niederspannungsnetz ist folglich in der Tabelle 72 eine Kennung K2 hinterlegt, für die z.B. Informationen über die Art des Betriebsmittels (Ladesäule, Batterie, usw.) sowie Betriebsparameter, wie z.B. maximale und minimale Energieaufnahme, abrufbar sind.

Für die Steuereinrichtungen wird ebenfalls eine Tabelle, nämlich eine erste Datenstruktur 70, angelegt. Diese enthält jeweils eine erste Kennung K₁ der Steuereinrichtungen 12, 18, 20, 22 sowie eine erste Kommunikationsadresse A₁ der Ortsnetzstationen bzw. der Kommunikationseinrichtung 13, 17, 19, 21 und eine geographische Position P₁ der Ortsnetzstationen. Beispielsweise können die für die Tabelle 70 benötigten Informationen aus einem Geoinformationssystem aus einer Leitstelle für das Mittelspannungsnetz 2 bzw. das nachgeordnete Niederspannungsnetz abgefragt werden. Alternativ können diese Daten auch bei einer Installation oder Nachrüstung einer Steuereinrichtung 12, 18, 20, 22 durch einen Installateur bereitgestellt und übermittelt werden.

Erfindungsgemäß wird nun anhand der beiden Datenstrukturen 70, 72 eine Zuordnung bzw. ein Matching von Steuereinrichtungen zu geographisch in der Nähe befindlichen Betriebsmitteln vorgenommen. Dieses erfolgt anhand der geographischen Positionen P₁ und P₂, die in den Datenstrukturen 70, 72 hinterlegt sind. Beispielsweise ergibt sich für die Steuerrichtung 12 bzw. die Ortsnetzstation 3, dass sich die Betriebsmittel 9, 10, 27, 28, 23 (in aufsteigender geographischer Entfernung) nah zur Steuereinrichtung 12 bzw. Ortsnetzstation 3 befinden.

Hierdurch ist eine hohe Wahrscheinlichkeit gegeben, dass einige dieser Betriebsmittel an den Ausgangsleitungen 7, 8 der Ortsnetzstation 3 angeschlossen sind. Die genannte Zuordnung bzw. Vorauswahl von Betriebsmitteln wird für die Steuereinrichtung 12 mittels eine Datentelegramms 100 an die Kommunikationseinrichtung 13 der Ortsnetzstation 3 übermittelt und dort der Steuereinrichtung 12 zur Verfügung gestellt. Die Steuereinrichtung 12 wählt ein vorausgewähltes bzw. zugeordnetes Betriebsmittel, wie beispielsweise das Betriebsmittel 9, aus und sendet für dieses ausgewählte Betriebsmittel 9 spezifischen Teststeuerbefehle 101, 102 per Power Line Communication über die Ausgangsleitungen 7,8 an die vermeintlich nachgeordneten Betriebsmittel 9, 23, 10, 27, 28 usw. aus.

Da sich die Betriebsmittel 27, 28 jedoch auf den Ausgangsleitungen 25 bzw. 26 der Ortsnetzstation 4 befinden, erhalten sie die Teststeuerbefehle 101, 102 nicht. Das Betriebsmittel 10 erhält den Teststeuerbefehl 102, verändert seine Energieabnahme jedoch nicht, weil der Teststeuerbefehl 102 nur zur Steuerung des Betriebsmittel 9 ausgebildet ist. Gleiches gilt für das Betriebsmittel 23, das zwar den Steuerbefehl 101 erhält, aber ebenfalls seinen Energieverbrauch nicht anpasst, weil der Teststeuerbefehl 101 nicht für dieses Betriebsmittel vorgesehen ist. Das Betriebsmittel 9 jedoch empfängt den Teststeuerbefehl 101 und verändert seinen Energieverbrauch.

Beispielsweise wird die Leistungsaufnahme für einen vordefinierten Zeitraum von 1 Minute auf 0 kW abgesenkt bzw. das Betriebsmittel 9 abgeschaltet. Alternativ kann auch eine maximale Leistungsabnahme für einen vorgenebenen Zeitpunkt vorgesehen werden. Diese Veränderung einer Leistungsaufnahme kann mittels der an der Ausgangsleitung 7 angeordneten Messeinrichtung beispielsweise anhand eines fließendes Stromes erkannt werden. Diese Veränderung dauert entsprechend des vorgegebenen Zeitfensters 1 min an und kehrt dann auf das Ausgangsniveau zurück. Bei der Messeinrichtung 103 der Ausgangsleitung 8 kann keine solche Veränderung erkannt werden. Entsprechend erfasst die Steuereinrichtung 12, dass das Betriebsmittel 9 an der Ausgangleitung 7 angeordnet sein muss.

Lässt sich keine klare Veränderung ermitteln oder überlagern andere Effekte im dem Niederspannungsnetz die Messungen der Messeinrichtungen 103, so können die vorgestellten Schritte zur Topologieerkennung mehrfach ausgeführt werden. Auf diese Weise kann statistisch relativ leicht nach einigen Durchläufen erkannt werden, dass tatsächlich die Teststeuerbefehle 101, 102 für die Veränderungen der gemessenen Größen auf den Ausgangsleitungen 7, 8 ausschlaggebend waren und entsprechend eine Zuordnung möglich machen.

Nacheinander wird nun die Steuereinrichtung 12 andere Test-steuerbefehle für die weiteren vorausgewählten Betriebsmittel 10, 27, 28, 23 erstellen und Veränderungen auf den Ausgangsleitungen 7, 8 messen. Durch dieses iterative Verfahren wird nach und nach erkannt, dass an der Ausgangsleitung 7 die Betriebsmittel 9, 23 und an der Ausgangsleitung 8 das Betriebsmittel 10 eine Ladesäule für Elektrofahrzeuge, angeordnet sind. Diese Information kann mittels eines Datentelegramms 105 über die Datenkommunikationsverbindung 62 an die Cloudeinrichtung 61 übermittelt werden. In ähnlicher Weise wird auch für die weiteren Betriebsmittel und Ausgangsleitungen der Ortsnetzstationen 4, 5, 6 eine Zuordnung vorgenommen und zu einer Topologieinformation verarbeitet. Diese Topologieinformation 90 kann dann mittels der Cloudeinrichtung 61 für einen Benutzer der Desktopeinrichtung 74, 75 graphisch oder tabellarisch dargestellt werden.

## Patentansprüche

1. Verfahren zur Erkennung einer Topologie (90) in einem Niederspannungsnetz, das Ortsnetzstationen (3,4,5,6) mit jeweils mehreren Ausgangsleitungen (7,8,25,26,31,40,41,42,43,44,46) aufweist, wobei jede Ausgangsleitung (7,8,25,26,31,40,41,42,43,44,46) mit mindestens einem steuerbaren elektrischen Betriebsmittel (9,10,23,27,28,32,47,48,80-87) verbunden ist, und wobei jede Ortsnetzstation (3,4,5,6) eine Steuereinrichtung (12,18,20,22) aufweist, **gekennzeichnet durch** die mittels einer Rechneranordnung (61,73,74,75) durchgeführten Schritte:
- Zuordnen von Betriebsmitteln (9,10,23,27,28,32,47,48,80-87) zu den Steuereinrichtungen (3,4,5,6) basierend auf geographischer Nähe, wobei geographische Nähe einen physischen Abstand zwischen einer Ortsnetzstation und einem Betriebsmittel meint, und
- Auswählen eines zugeordneten Betriebsmittels (9), und
- Aussenden eines für das ausgewählte Betriebsmittel (9) spezifischen Test-Steuerbefehls (101,102) von der jeweiligen Steuereinrichtung (12) zu den ihr jeweils zugeordneten Betriebsmitteln (9,10,23), wobei der Test-Steuerbefehl (101,102) zur Auslösung einer Veränderung einer Leistungsaufnahme oder Leistungsabgabe des ausgewählten Betriebsmittels (9) ausgebildet ist, und
- Messen einer Veränderung mindestens einer elektrischen Größe an den Ausgangsleitungen (7,8,25,26,31,40,41,42,43,44,46) der jeweiligen Ortnetzstation (3) mittels jeweils einer Messeinrichtung (103), und
- Zuordnen des ausgewählten elektrischen Betriebsmittels (9) zu derjenigen Ausgangsleitung (7) derjenigen Ortsnetzstation (3), an der eine Korrelation zwischen Test-Steuerbefehl (101) und Veränderung erkannt wird.

2. Verfahren nach Anspruch 1, **dadurch gekennzeichnet, dass** mittels der Rechneranordnung (61,73,74,75) folgende zeitlich vorgelagerte Schritte ausgeführt werden:
- Bereitstellen einer ersten Datenstruktur (70), die für jede Steuereinrichtung (12,18,20,22) eine erste Kennung (K₁) und eine erste Kommunikationsadresse (A₁) und eine erste geographische Position (P₁) aufweist, und
- Bereitstellen einer zweiten Datenstruktur (72), die für jedes Betriebsmittel (9,10,23,27,28,32,47,48,80-87) eine zweite Kennung (K₂) und eine zweite Kommunikationsadresse (A₂) und eine zweite geographische Position (P₂) aufweist.

3. Verfahren nach Anspruch 2, **dadurch gekennzeichnet, dass** das Bereitstellen der Datenstrukturen (70,72) in der Rechneranordnung (61,73,74,75) erfolgt, indem von den Betriebsmitteln (9,10,23,27,28,32,47,48,80-87) jeweils mittels einer Kommunikationseinrichtung (14,15,24,29,30,35,37,45,51-59) drahtlos die jeweilige Kennung (K₂), Kommunikationsadresse (A₂) und geographische Position (P₂) übermittelt wird.

4. Verfahren nach Anspruch 3, **dadurch gekennzeichnet, dass** die drahtlose Übermittlung mittels Funksignalen nach einen der folgenden Standards erfolgt: W-Lan oder long range radio oder Mobilfunk oder 2G oder 3G oder 4G, LTE, oder 5G.

5. Verfahren nach einem der vorhergehenden Ansprüche, **dadurch gekennzeichnet, dass** der Test-Steuerbefehl (101,102) per Datenübertragung über eine elektrische Leitung (7,8) übermittelt wird.

6. Verfahren nach einem der vorhergehenden Ansprüche, **dadurch gekennzeichnet, dass** nacheinander eine Auswahl und ein Aussenden eines Test-Steuerbefehls (101,102) für alle einer Steuereinrichtung (12) zugeordneten Betriebsmittel (9,10,23) erfolgt.

7. Verfahren nach einem der vorhergehenden Ansprüche, **dadurch gekennzeichnet, dass** als elektrische Betriebsmittel mindestens eines der folgenden Betriebsmittel verwendet wird: Ladestation für Elektrofahrzeuge (10,32,36,48,87), Wärmepumpe (23,51), Photovoltaikanlage (27), Batterie (9,28,80-86).

8. Verfahren nach einem der vorhergehenden Ansprüche, **dadurch gekennzeichnet, dass** für die Rechneranordnung (61,73,74,75) ein zentraler Server (61) verwendet wird.

9. Verfahren nach einem der vorhergehenden Ansprüche, **dadurch gekennzeichnet, dass** die Rechneranordnung (61,73,74,75) als eine Cloud-Einrichtung (61) ausgebildet wird.

10. Verfahren nach einem der vorhergehenden Ansprüche, **dadurch gekennzeichnet, dass** die Rechneranordnung dezentral bei den Ortsnetzstationen (3,4,5,6) angeordnet wird, wobei eine Datenkommunikation jeweils bilateral mit allen Ortsnetzstationen (3,4,5,6) erfolgt, so dass für jede lokale Rechnereinrichtung einer Ortsnetzstation (3,4,5,6) lokal jeweils eine erste und eine zweite Datenstruktur (70,72) bereitgestellt werden.

11. Verfahren nach einem der vorhergehenden Ansprüche, **dadurch gekennzeichnet, dass** das Zuordnen von Betriebsmitteln (9,10,23,27,28,32,47,48,80-87) zu Steuereinrichtungen (12,18,20,22) basierend auf der geographischen Nähe erfolgt, indem für jedes Steuergerät (12) eine Liste von Betriebsmitteln (100) erstellt wird, wobei die Liste nach geographischer Entfernung sortiert wird.

12. Verfahren nach Anspruch 10, **dadurch gekennzeichnet, dass** aus der jeweiligen sortierten Liste für eine Steuereinrichtung (100) nur eine festgelegte Anzahl von geographisch nahen zugeordneten Betriebsmitteln (9,10,27,28,23) ausgewählt wird, wobei die Anzahl in Abhängigkeit von einer geographischen Dichte von Ortnetzstationen (3,4,5,6) im Umfeld der Ortnetzstation (3), der die Steuereinrichtung (12) zugeordnet ist, festgelegt wird.

13. Anordnung (1) zur Erkennung einer Topologie (90) in einem Niederspannungsnetz, **gekennzeichnet durch**:
- Ortsnetzstationen (3,4,5,6) mit jeweils mehreren Ausgangsleitungen (7,8,25,26,31,40,41,42,43,44,46), wobei jede Ausgangsleitung (7,8,25,26,31,40,41,42,43,44,46) mit mindestens einem steuerbaren elektrischen Betriebsmittel (9,10,23,27,28,32,47,48,80-87) verbunden ist, und wobei jede Ortsnetzstation (3,4,5,6) eine Steuereinrichtung (12,18,20,22) aufweist, und
- eine Rechneranordnung (61,73,74,75), die ausgebildet ist, die Betriebsmittel (9,10,23,27,28,32,47,48,80-87) basierend auf geographischer Nähe zu den Steuereinrichtungen (3,4,5,6) zuzuordnen, wobei geographische Nähe einen physischen Abstand zwischen einer Ortsnetzstation und einem Betriebsmittel meint, und
ein zugeordnetes Betriebsmittel (9) auszuwählen, und
einen für das ausgewählte Betriebsmittel (9) spezifischen Test-Steuerbefehl (101,102) von einer Kommunikationseinrichtung der jeweiligen Steuereinrichtung (12) zu Kommunikationseinrichtungen der ihr jeweils zugeordneten Betriebsmittel (9,10,23) auszusenden, wobei der Test-Steuerbefehl (101,102) zur Auslösung einer Veränderung einer Leistungsaufnahme oder Leistungsabgabe des ausgewählten Betriebsmittels (9) ausgebildet ist, und
- jeweils eine Messeinrichtung (103) an jeder Ausgangsleitung (7,8,25,26,31,40,41,42,43,44,46) der Ortnetzstationen (3,4,5,6), die jeweils ausgebildet ist, eine Veränderung mindestens einer elektrischen Größe zu messen,
und **dadurch, dass**
- die Rechneranordnung (61,73,74,75) ausgebildet ist, das ausgewählte elektrische Betriebsmittel (9) zu derjenigen Ausgangsleitung (7) derjenigen Ortsnetzstation (3) zuzuordnen, an der eine Korrelation zwischen Test-Steuerbefehl (101) und Veränderung erkannt wird.

14. Anordnung nach Anspruch 13, **dadurch gekennzeichnet, dass** die Rechneranordnung (61,73,74,75) ausgebildet ist, folgende zeitlich vorgelagerte Schritte auszuführen:
- Bereitstellen einer ersten Datenstruktur (70), die für jede Steuereinrichtung (12,18,20,22) eine erste Kennung (K₁) und eine erste Kommunikationsadresse (A₁) und eine erste geographische Position (P₁) aufweist, und
- Bereitstellen einer zweiten Datenstruktur (72), die für jedes Betriebsmittel eine zweite Kennung (K₂) und eine zweite Kommunikationsadresse (A₂) und eine zweite geographische Position (P₂) aufweist.

15. Anordnung nach Anspruch 14, **dadurch gekennzeichnet, dass** die Rechneranordnung (61,73,74,75) ausgebildet ist, die Datenstrukturen (70,72) bereitzustellen, indem von den Betriebsmitteln (9,10,23,27,28,32,47,48,80-87) jeweils mittels einer Kommunikationseinrichtung (14,15,24,29,30,35,37,45,51-59) drahtlos die jeweilige Kennung (K₂), Kommunikationsadresse (A₂) und geographische Position (P₂) übermittelt wird.

## Claims

1. Method for recognizing a topology (90) in a low-voltage network that has local substations (3,4,5,6) each having a plurality of output lines (7,8,25,26,31,40,41,42,43,44,46), wherein each output line (7,8,25,26,31,40,41,42,43,44,46) is connected to at least one controllable electrical resource (9,10,23,27,28,32,47,48,80-87), and wherein each local substation (3,4,5,6) has a control apparatus (12,18,20,22), **characterized by** the steps performed by way of a computer arrangement (61,73,74,75):
- assigning resources (9,10,23,27,28,32,47,48,80-87) to the control apparatuses (3,4,5,6) based on geographical proximity, wherein geographical proximity means a physical distance between a local substation and a resource, and
- selecting an assigned resource (9), and
- transmitting a test control command (101,102) specific to the selected resource (9) from the respective control apparatus (12) to the resources (9,10,23) respectively assigned thereto, wherein the test control command (101,102) is designed to trigger a change in a power consumption or power output of the selected resource (9), and
- measuring a change in at least one electrical variable on the output lines (7,8,25,26,31,40,41,42,43,44,46) of the respective local substation (3) by way of a respective measuring apparatus (103), and
- assigning the selected electrical resource (9) to that output line (7) of that local substation (3) on which a correlation between test control command (101) and change is recognized.

2. Method according to Claim 1, **characterized in that** the following temporally preceding steps are performed by way of the computer arrangement (61,73,74,75):
- providing a first data structure (70) that has a first identifier (K₁) and a first communication address (A₁) and a first geographical position (P₁) for each control apparatus (12,18,20,22), and
- providing a second data structure (72) that has a second identifier (K₂) and a second communication address (A₂) and a second geographical position (P₂) for each resource (9,10,23,27,28,32,47,48,80-87) .

3. Method according to Claim 2, **characterized in that** the data structures (70,72) are provided in the computer arrangement (61,73,74,75) by the resources (9,10,23,27,28,32,47,48,80-87) each wirelessly transmitting the respective identifier (K₂), communication address (A₂) and geographical position (P₂) by way of a communication apparatus (14,15,24,29,30,35,37,45,51-59) .

4. Method according to Claim 3, **characterized in that** the wireless transmission takes place by way of radio signals in accordance with one of the following standards: W-LAN or long-range radio or mobile radio or 2G or 3G or 4G, LTE, or 5G.

5. Method according to one of the preceding claims, **characterized in that** the test control command (101,102) is transmitted through data transmission via an electrical line (7, 8).

6. Method according to one of the preceding claims, **characterized in that** selection and transmission of a test control command (101,102) take place in succession for all of the resources (9,10,23) assigned to a control apparatus (12).

7. Method according to one of the preceding claims, **characterized in that** at least one of the following resources is used as electrical resource: charging station for electric vehicles (10,32,36,48,87), heat pump (23,51), photovoltaic system (27), battery (9,28,80-86).

8. Method according to one of the preceding claims, **characterized in that** a central server (61) is used for the computer arrangement (61,73,74,75).

9. Method according to one of the preceding claims, **characterized in that** the computer arrangement (61,73,74,75) is designed as a cloud apparatus (61).

10. Method according to one of the preceding claims, **characterized in that** the computer arrangement is arranged in a decentralized manner in the local substations (3,4,5,6), wherein data communication takes place in each case bilaterally with all of the local substations (3,4,5,6), such that in each case a first and a second data structure (70,72) are provided locally for each local computer apparatus of a local substation (3,4,5,6).

11. Method according to one of the preceding claims, **characterized in that** resources (9,10,23,27,28,32,47,48,80-87) are assigned to control apparatuses (12,18,20,22) based on the geographical proximity by creating a list of resources (100) for each control device (12), wherein the list is sorted according to geographical distance.

12. Method according to Claim 10, **characterized in that** only a defined number of geographically close assigned resources (9,10,27,28,23) are selected from the respective sorted list for a control apparatus (100), wherein the number is defined on the basis of a geographical density of local substations (3,4,5,6) in the surroundings of the local substation (3) to which the control apparatus (12) is assigned.

13. Arrangement (1) for recognizing a topology (90) in a low-voltage network, **characterized by**:
- local substations (3,4,5,6) each having a plurality of output lines (7,8,25,26,31,40,41,42,43,44,46), wherein each output line (7,8,25,26,31,40,41,42,43,44,46) is connected to at least one controllable electrical resource (9,10,23,27,28,32,47,48,80-87), and wherein each local substation (3,4,5,6) has a control apparatus (12,18,20,22), and
- a computer arrangement (61,73,74,75) that is designed to assign the resources (9,10,23,27,28,32,47,48,80-87) based on geographical proximity to the control apparatuses (3,4,5,6), wherein geographical proximity means a physical distance between a local substation and a resource, and
to select an assigned resource (9), and
to transmit a test control command (101,102) specific to the selected resource (9) from a communication apparatus of the respective control apparatus (12) to communication apparatuses of the resources (9,10,23) respectively assigned thereto, wherein the test control command (101,102) is designed to trigger a change in a power consumption or power output of the selected resource (9), and
- a respective measuring apparatus (103) on each output line (7,8,25,26,31,40,41,42,43,44,46) of the local substations (3,4,5,6) that is in each case designed to measure a change in at least one electrical variable,
and in that
- the computer arrangement (61,73,74,75) is designed to assign the selected electrical resource (9) to that output line (7) of that local substation (3) on which a correlation between test control command (101) and change is recognized.

14. Arrangement according to Claim 13, **characterized in that** the computer arrangement (61,73,74,75) is designed to perform the following temporally preceding steps:
- providing a first data structure (70) that has a first identifier (K₁) and a first communication address (A₁) and a first geographical position (P₁) for each control apparatus (12,18,20,22), and
- providing a second data structure (72) that has a second identifier (K₂) and a second communication address (A₂) and a second geographical position (P₂) for each resource.

15. Arrangement according to Claim 14, **characterized in that** the computer arrangement (61,73,74,75) is designed to provide the data structures (70,72) by the resources (9,10,23,27,28,32,47,48,80-87) each wirelessly transmitting the respective identifier (K₂), communication address (A₂) and geographical position (P₂) by way of a communication apparatus (14,15,24,29,30,35,37,45,51-59) .

## Revendications

1. Procédé de détection d'une topologie (90) dans un réseau en basse tension, qui a des postes (3, 4, 5, 6) de réseau local ayant chacun plusieurs lignes (7, 8, 25, 26, 31, 40, 41, 42, 43, 44, 46) de sortie, dans lequel chaque ligne (7, 8, 25, 26, 31, 40, 41, 42, 43, 44, 46) de sortie est reliée à au moins un moyen (9, 10, 23, 27, 28, 32, 47, 48, 80 à 87) de fonctionnement électrique pouvant être commandé, et dans lequel chaque poste (3, 4, 5, 6) de réseau local a un dispositif (12, 18, 20, 22) de commande,
**caractérisé par** les stades effectués au moyen d'un agencement (61, 73, 74, 75) informatique :
- affectation de moyens (9, 10, 23, 27, 28, 32, 47, 48, 80 à 87) de fonctionnement aux dispositifs (3, 4, 5, 6) de commande sur la base de la proximité géométrique, dans lequel la proximité géométrique signifie une distance physique entre un poste de réseau local et un moyen de fonctionnement, et
- sélection d'un moyen (9) de fonctionnement affecté, et
- envoi d'une instruction (101, 102) de commande test spécifique au moyen (9) de fonctionnement choisi par le dispositif (12) respectif de commande aux moyens (9, 10, 23) de fonctionnement affectés respectivement, dans lequel l'instruction (101, 102) de commande test est constituée pour déclencher une variation d'une absorption de puissance ou d'une cession de puissance du moyen (9) de fonctionnement choisi, et
- mesure d'une variation au moyen d'une grandeur électrique sur les lignes (7, 8, 25, 26, 31, 40, 41, 42, 43, 44, 46) de sortie du poste (3) de réseau local respectif au moyen respectivement d'un dispositif (103) de mesure, et
- affectation du moyen (9) de fonctionnement électrique choisi à la ligne (7) de sortie du poste (3) de réseau local où on détecte une corrélation entre l'instruction (101) de commande test et la variation.

2. Procédé suivant la revendication 1, **caractérisé en ce qu'**on effectue au moyen de l'agencement (61, 73, 74, 75) informatique des stades précédents suivants :
- on se procure une première structure (70) de données, qui a pour chaque dispositif (12, 18, 20, 22) de commande une première caractérisation (K₁) et une première adresse (A₂) de communication et une première position (P₁) géométrique, et
- on se procure une deuxième structure (72) de données, qui a pour chaque moyen (9, 10, 23, 27, 28, 32, 47, 48, 80 à 87) de fonctionnement une deuxième caractérisation (K₂) et une deuxième adresse (A₂) de communication et une deuxième position (P₂) géographique.

3. Procédé suivant la revendication 2, **caractérisé en ce que** se procurer des structures (70, 72) de données dans l'agencement (61, 73, 74, 75) informatique s'effectue en transmettant, par les moyens (9, 10, 23, 27, 28, 32, 47, 48, 80 à 87) de fonctionnement respectivement au moyen d'un dispositif (14, 15, 24, 29, 30, 35, 37, 45, 51 à 59) de communication sans fil, la caractérisation (K₂) respective, l'adresse (A₂) de communication et la position (P₂) géographique.

4. Procédé suivant la revendication 3, **caractérisé en ce que** la transmission sans fil s'effectue au moyen de signaux radio suivant l'une des normes suivantes : W-Lan ou long range radio ou téléphonie mobile ou 2G ou 3G ou 4G, LTE, ou 5G.

5. Procédé suivant l'une des revendications précédentes, **caractérisé en ce que** l'on transmet l'instruction (101, 102) de commande de test par transmission de données par l'intermédiaire d'une ligne (7, 8) électrique.

6. Procédé suivant l'une des revendications précédentes, **caractérisé en ce qu'**on effectue l'un après l'autre un choix et un envoi d'une instruction (101, 102) de commande de test pour tous les moyens (9, 10, 23) de fonctionnement affectés à un dispositif (12) de commande.

7. Procédé suivant l'une des revendications précédentes, **caractérisé en ce que** l'on utilise comme moyen de fonctionnement électrique au moins l'un des moyens de fonctionnement suivants : poste de charge de véhicules (10, 32, 36, 48, 87) électriques, pompe (23, 51) à chaleur, installation (27) photovoltaïque, batterie (9, 28, 80 à 86).

8. Procédé suivant l'une des revendications précédentes, **caractérisé en ce que** l'on utilise un serveur (61) central pour l'agencement (61, 73, 74, 75) informatique.

9. Procédé suivant l'une des revendications précédentes, **caractérisé en ce que** l'agencement (61, 73, 74, 75) informatique est constitué sous la forme d'un dispositif (61) à nuage.

10. Procédé suivant l'une des revendications précédentes, **caractérisé en ce que** l'on dispose l'agencement informatique de manière décentralisée aux postes (3, 4, 5, 6) de réseau local, dans lequel une communication de données s'effectue respectivement de manière bilatérale avec tous les postes (3, 4, 5, 6) de réseau local de manière à disposer, pour chaque dispositif informatique local d'un poste (3, 4, 5, 6) de réseau local, localement respectivement d'une première et d'une deuxième structure (70, 72) de données.

11. Procédé suivant l'une des revendications précédentes, **caractérisé en ce que** l'affectation de moyens (9, 10, 23, 27, 28, 32, 47, 48, 80 à 87) de fonctionnement à des dispositifs (12, 18, 20, 22) de commande s'effectue sur la base de la proximité géométrique en établissant pour chaque appareil (12) de commande une liste de moyens (100) de fonctionnement, dans lequel on établit la liste en fonction de l'éloignement géographique.

12. Procédé suivant la revendication 10, **caractérisé en ce qu'**à partir de chaque liste établie, on choisit pour un dispositif (100) de commande seulement un nombre fixé de moyens (9, 10, 27, 28, 23) de fonctionnement affectés proches géographiquement, dans lequel on fixe le nombre en fonction d'une densité géographique (3, 4, 5, 6) de postes de réseau local dans l'environnement du poste (3) de réseau local, qui est affecté au dispositif (12) de commande.

13. Agencement (1) de détection d'une topologie (90) dans un réseau en basse tension, **caractérisé par** :
- des postes (3, 4, 5, 6) de réseau local ayant respectivement plusieurs lignes (7, 8, 25, 26, 31, 40, 41, 42, 43, 44, 46) de sortie, dans lequel chaque ligne (7, 8, 25, 26, 31, 40, 41, 42, 43, 44, 46) de sortie est reliée à au moins un moyen (9, 10, 23, 27, 28, 32, 47, 48, 80 à 87) de fonctionnement électrique pouvant être commandé et dans lequel chaque poste (3, 4, 5, 6) de réseau local a un dispositif (12, 18, 20, 22) de commande, et
- un agencement (61, 73, 74, 75) informatique, qui est constitué pour affecter les moyens (9, 10, 23, 27, 28, 32, 47, 48, 80 à 87) de fonctionnement aux dispositifs (3, 4, 5, 6) de commande sur la base de la proximité géographique, dans lequel proximité géographique signifie distance physique entre un poste de réseau local et un moyen de fonctionnement, et
sélectionner un moyen (9) de fonctionnement affecté et envoyer une instruction (101, 102) de commande de test, spécifique au moyen (9) de fonctionnement choisi, d'un dispositif de communication du dispositif (12) de commande respectif à des dispositifs de communication du moyen (9, 10, 23) de fonctionnement qui lui est affecté respectivement, dans lequel l'instruction (101, 102) de commande de test est constituée pour le déclenchement d'une variation d'une absorption de puissance ou d'une cession de puissance du moyen (9) de fonctionnement choisi, et
- respectivement un dispositif (103) de mesure sur chaque ligne (7, 8, 25, 26, 31, 40, 41, 42, 43, 44, 46) de sortie des postes (3, 4, 5, 6) de réseau local, qui est constitué respectivement pour mesurer une variation d'au moins une grandeur électrique,
et **caractérisé en ce que**
- l'agencement (61, 73, 74, 75) informatique est constitué pour affecter le moyen (9) de fonctionnement électrique choisi à la ligne (7) de sortie du poste (3) de réseau local, où une corrélation entre une instruction (101) de commande de test et une variation est détectée.

14. Agencement suivant la revendication 13, **caractérisé en ce que** l'agencement (61, 73, 74, 75) informatique est constitué pour effectuer les stades précédents suivants :
- on se procure une première structure (70) de données, qui a pour chaque dispositif (12, 18, 20, 22) de commande une première caractérisation (K₁) et une première adresse (A₁) de communication et une première position (P₁) géométrique, et
- on se procure une deuxième structure (72) de données, qui a pour chaque moyen de fonctionnement une deuxième caractérisation (K₂) et une deuxième adresse (A₂) de communication et une deuxième position (P₂) géographique.

15. Agencement suivant la revendication 14, **caractérisé en ce que** l'agencement (61, 73, 74, 75) informatique est constitué pour disposer de structures (70, 72) de données, en transmettant, des moyens (9, 10, 23, 27, 28, 32, 47, 48, 80 à 87) de fonctionnement respectivement au moyen d'un dispositif (14, 15, 24, 29, 30, 35, 37, 45, 51 à 59) de communication sans fil, la caractérisation (K₂) respective, l'adresse (A₂) de communication et la position (P₂) géographique.
